# EUROPEAN PATENT SPECIFICATION

(11) **EP 0 278 775 B1**
(45) Date of publication and mention of the grant of the patent: **13.09.1995**
(21) Application number: 88301189.2
(22) Date of filing: 12.02.1988
(51) Int. Cl.: G02B 6/42, G02B 6/28

(54) **Optical fiber tap utilizing reflector**
Faseroptischer Abzweiger unter Verwendung eines Reflektors
Elément de dérivation à fibre optique utilisant un réflecteur

(30) Priority: 13.02.1987 US 14890
(43) Date of publication of application: 17.08.1988
(73) Proprietor: RAYCHEM CORPORATION (a Delaware corporation), Menlo Park, California 94025 (US)
(72) Inventor: Uken, William David, Fremont California 94539 (US)
(74) Representative: Hall, Robert Leonard

(56) References cited:
- EP-A- 0 209 329
- GB-A- 2 158 607
- GB-A- 2 162 657
- US-A- 3 982 123
- US-A- 4 270 839
- US-A- 4 741 585
- PATENT ABSTRACTS OF JAPAN, vol. 10, no. 116 (P-452)[2173], 30th April 1986 & JP A 60244908
- OPTICAL FIBER COMMUNICATION CONFERENCE AND SIXTH INTERNATIONAL CONFERENCE ONINTEGRATED OPTICS AND OPTICAL FIBER COMMUNICATION TECHNICAL DIGEST, Reno,Nevada, 19th - 22nd January 1987, page 107, Optical Society of America,Washington, DC, US; J.A. ABERSON et al.: "Local power injection into single-mode fibers using periodic microbends: a low-stress high-efficiency injector"

## Description

The present invention relates to a optical fiber taps and to a method for making same.

Numerous methods have been proposed in the prior art for distributing information using an optical fiber, preferred methods including star, ring, and bus architectural networks. Generally speaking, star and ring networks utilize point-to-point connections, whereas bus networks are capable of utilizing non-point-to-point connections whereby an optical signal is only partially interrupted by any one connection.

For example Polczynski, U.S. patent 4,089,584 discloses a bus network which utilizes an optical fiber having a rectangular core and cladding, and connection or tapping of the fiber is accomplished by removing the cladding and disposing a prism or grading against an exposed rectangular core. Such networks are disadvantageous since the fiber and taps usable therewith are relatively complex in design and hence unduly expensive, and optical network performance is rather poor in view of relatively low tapping efficiencies that result using such methods.

Miller, GB 2,126,749B and Dakin et al. "Experimental Studies into the Non-Invasive Collection and Distribution of Data on a Fiber-Optic Monomode Bus" propose designing a read optical fiber bus using taps whereby light is withdrawn through a side of the optical fiber by passing the light through a coating of the fiber. Miller collects the light from the bus fiber by disposing a photodetector at an end of a curved and grooved light pipe disposed around the bus fiber, and Dakin et al. collects the light by tightly pressing a polymeric fiber with part of its cladding removed against a curved portion of the bus fiber. Such techniques are also disadvantageous in that again the taps are complicated in design, are craft sensitive to install in the field, and are not sufficiently efficient when tight flux budgets are mandated by network design.

Goell et al., U.S. patent 3,982,123 at Figures 5A and 5B discloses an optical fiber read tap whereby an exposed glass cladding of a bent optical fiber portion is glued to a top of a photodetector. Such taps are disadvantageous since a strength of the fiber is disadvantageously affected by removal of its outer protective buffer, and rather small coupling light efficiencies are obtained by simply using epoxy to secure a bent optical fiber onto a top surface of a photodetector. In addition, the optical fibre is not releaseable from the tap.

Cross, U.S. patent 4,270,839 discloses a tap for an optical fibre whereby the fibre is bent in air, and downstream from the bent portion of the optical fibre a straight section of the optical fibre is glued within a straight light pipe which thereafter is curved and has a light detector at a remote end thereof. Again, such taps are disadvantageous since it has been found to yield relatively low light coupling efficiencies, and the optical fibre is not releaseable from the light pipe once glued thereonto.

Campbell et al., U.S. serial no. 602,242, filed April 19, 1984; Campbell et al., U.S. serial no. 754,035, filed July 11, 1985; and Campbell et al., U.S. serial no. 614,884, filed May 25, 1984, all assigned to the assignee of the present invention, the disclosures of which are incorporated herein by reference, disclose several advantageous kinds of taps for either injecting light into or withdrawing light from optical fibres. However, there continues to be a need for yet more efficient taps which are also mechanically simple in structure.

GB-A-2162657 discloses apparatus for injecting light into the core of a buffer coated optical fibre, comprising a transparent body having at least three faces: an arcuate contact face adapted to bear against a smoothly curved length of fibre, an entry face through which light emitted by a light source is injected into the body in a direction towards the contact face, and a reflecting face which reflects light in a direction towards the contact face. Light injected through the entry face is directed and reflected towards the smoothly curved contact face from where it will pass into the fibre against which the body bears. A similar apparatus for extracting ligt from an optical fiber is also disclosed.

GB-A-2158607 discloses a fibre optic coupler having a transparent body through which a passage extends. The passage accommodates a waveguide and has an angled section with the apex of the angle sufficiently sharp that light propagating along the waveguide is emitted as a beam at the angled section.

JP 60-244908 discloses a cutless signal detector to detect a leaking optical signal. It has a tip of a first member formed of a transparent hard material, and a corrugated bent shape part is formed at the tip. A photodetector is arranged near the bent shape part in the first member. The bent shape part is shaped such that it meshes with a second member, and a reflection mirror is arranged nearby. When the first and second parts are brought together with a fibre between them any leaking optical signal is detected by the photodetector.

Optical fibre Comm. Conf. and Sixth Int. Conf. on Integrated Optics and Optical Fibre Comm. Tech. Digest 19-22 January 1987 page 107 discloses that small scale fibre-axis distortions of the correct periodically create resonant power coupling between cladding and core that is more than 100 times greater than macrobend techniques.

Accordingly, it is an object of the present invention to eliminate the above-noted drawbacks and to provide an optical read tap and/or optical write tap and network usable therewith which operates more efficiently than heretofore described.

These and other objects are achieved by utilizing a tap which bends an optical fibre in a plane, preferably the plane being flat, and utilizes reflecting means for directing light withdrawn from the core of the optical fibre towards a light collection end surface for directing light from a light emitting end surface into the core of the optical fibre.

Thus, the present invention provides a tap for extracting light from an intermediate portion of an optical fibre core by passing the light through a side of the optical fibre, comprising:
a light receiving element having a receiving end surface;
an optical coupler consisting of a transparent member provided with a concave outer surface portion for receiving the intermediate portion of the optical fibre bent thereagainst and disposed in a plane, so as to extract light at said optical fibre bent portion;
means for maintaining the intermediate portion of the optical fibre bent in said plane against said concave outer portion of said transparent member; and
a light reflector formed on another outer surface portion of said transparent member, said reflector being disposed in the path of the extracted light downstream of the bend and extending traversely to the plane in which the optical fibre bent portion is intended to be maintained so as to deflect the extracted light toward the light receiving element end surface,
characterized in that the receiving end surface of the light receiving element is disposed completely outside said plane in which the optical fibre bent portion is intended to be maintained, and in that the transparent member constituting the optical coupler has an elongate and curved shape, said elongate and curved transparent member being provided in its concave side surface with a groove for receiving said optical fibre bent portion, and said light reflector being formed on another outer surface portion of said curved elongate member which is inclined in such a manner with respect to the optical fibre bent portion maintaining plane as to deflect said extracted light toward said receiving end surface of said light receiving element which is completely outside said optical fibre bent portion maintaining plane.

The present invention also provides an analogous tap for injecting light into an intermediate portion of an optical fibre.

The invention further provides a method of making a tap for coupling light between a light element and an intermediate portion of an optical fibre core by passing the light through a side of the optical fibre, which method comprises:
providing a light element having an end surface;
providing an optical coupler consisting of a molded transparent member, provided with a concave outer surface portion for receiving the intermediate portion of the optical fibre bent thereagainst and disposed in a plane, so as to couple light at said optical fibre bent portion;
providing means for maintaining the intermediate portion of the optical fibre bent in said plane against said concave outer portion of said transparent member; and
forming a light reflector on another outer surface portion of said transparent member, said reflector being disposed in the path of the coupled light between the bend and the light element end surface and extending traversely to the plane in which the optical fibre bent portion is intended to be maintained so as to form a continuous light path between the bent optical fibre portion and the light element end surface,
characterised in that the end surface of the light element is disposed completely outside said plane in which the optical fibre bent portion is intended to be maintained, and in that the transparent member constituting the optical coupler has an elongate and curved shape, said elongate and curved transparent member being provided in its concave side surface with a groove for receiving said optical fibre bent portion, and said light reflector being formed on another outer surface portion of said curved elongate member which is inclined in such a manner with respect to the optical fibre bent portion maintaining plane as to deflect the light between said end surface and the bent optical fibre portion.

The light reflector preferably has a reflectance greater than 0.5, preferably has a reflectance greater than 0.5, preferably greater than 0.7 or 0.8, more preferably greater than 0.85 or 0.90, most preferably greater than 0.95, a polished light reflector being most preferred. Preferably, the light is coupled utilizing an optical coupler which has an index of refraction which optimally matches an outer surface of the optical fibre.

The reflecting surface is formed in a vicinity of the optical coupler and in close proximity therewith and deflects light out of the plane of the bent optical fiber portion and towards the end surface of a light element, the light element either constituting ultimately a photodetector for light detection or a light emitter for light injection. In any case, the light emitter or the light detector can be substantially displaced from the tap of the invention by utilizing a pigtail optical fiber light element which facilitates testing of the apparatus prior to permanent installation and after disposing a bus optical fiber within the tap. The tap further includes means for bending the optical fiber which is releaseable therefrom which also facilitates testing and repairs.

Since the light element is disposed outside the plane of the optical fiber bend, the bend profile of the optical fiber can be optimized for optimum optical efficiency and is not required to be unnecessarily further modified so as to accommodate mechanical size constraints imposed by a size of the light element, which is generally much larger than the fiber core.

The invention is most suitable for use in a serial manner on an optical fiber for creating either a read or a write bus therewith.

In addition, the invention allows the tap to be manufactured in a much more cost efficient way since simple molding techniques can be utilized to form a single component which incorporates both the bend profile features necessary to control and locate the fibre and the optical coupling and focusing elements required to optimally transfer the light between the light element and the fibre core in the bend. Also, a thickness of the component can be made sufficiently uniform to allow it to cool and harden in a stable manner when molding.
Figure 1 illustrates preferred embodiment of the invention which includes a member for releasably pressing an optical fibre so as to maintain a constant bend attitude therein;
Figure 2 illustrates an alternative embodiment of the invention which includes a waveguide for transmitting light to and from an optical fibre core;
Figure 3 illustrates one preferred embodiment of a network utilizing taps of the invention.

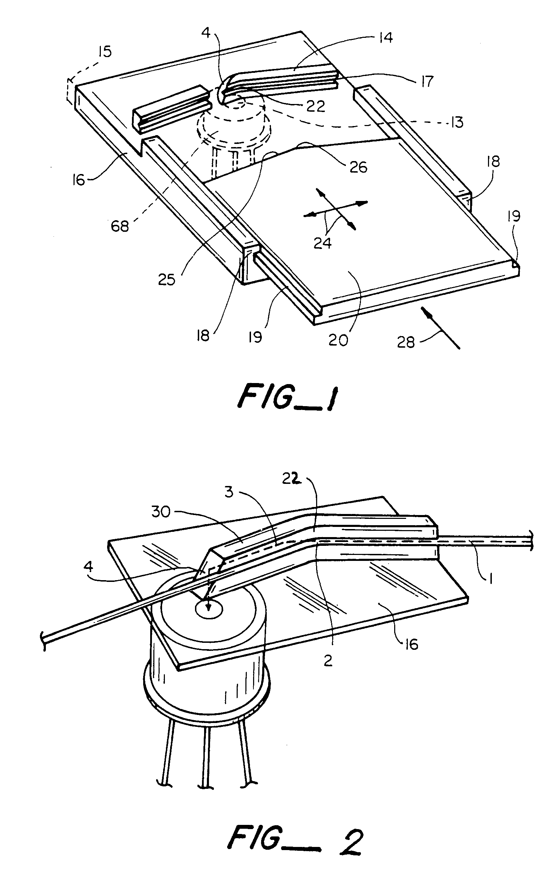

Figure 1 illustrates a geometry of a preferred tap embodiment whereby it is evident that in all cases a light element 68 has a reflective end surface 13 which is disposed in a plane which is parallel with plane 24 and whose optical axis is not parallel to plane 24 (but is preferably normal or perpendicular to that plane), the plane including the bent optical fibre portion which is to lie in groove 17 in the concave side surface 22 of the curved transparent member of optical coupler 14.

In Figure 1, a substrate 16 has formed thereon the groove 17 sized to accept an optical fibre 1 (shown in Figure 2) to be tapped, the groove 17 including the bent portion 22. The substrate 16 includes first and second flanges 18 which define first and second grooves 19 along which a member 20 can slide along or parallel to the plane 24 which includes the bent portion 22 and the bent optical fibre portion. An end face 25 of the member 20 has a curved profile 26 complementary to the curved profile of the groove 17 such that the optical fibre can be securely maintained in a constant bent attitude within the groove 17 by urging the member end face 25 against the optical fibre and the groove 17 by utilizing a force which urges the member 20 along a direction of force arrow 28. Preferably the force is resilient, and can be applied by a spring (not shown) so as to maintain a continuous load on the fibre regardless of dynamic changes which may occur over time, such as temperature induced differential material expansions and contractions, material creep due to stress, etc.

When the optical fibre is disposed in the tap of Figure 1 and is transmitting light in a direction from right to left in the drawing, light radiates outward from the fibre core, through its cladding, through its outer coating(s), and into the coupler 14 defining the groove bent portion 22 which bent portion acts to facilitate light transfer between the outer coating of the fibre and the coupler 14. If desired, a wetting agent, preferably stable, such as a partially cross-linked gel having finite elongation properties, such as an ultimate elongation in excess of 200 or 500% can be used to facilitate optical coupling. The light entering the optical coupler is deflected by the reflecting surface 4 of the coupler out of the plane 24 of the bent portion 2 of the fibre and groove 17 and towards the light element 68. Element 68 has an end surface 13 disposed entirely out of the plane 24, even through the end surface 13 can be in very close proximity to the bent portion 22. The reflection surface can simply be a smooth surface exposed to air, and shaped such that the withdrawn light hits the smooth surface at angles such that total internal reflection occurs from this surface with little or no light being refracted therethrough into the air. Preferably the smooth surface has a reflective coating thereon as well. It is preferred to form the surface so as to have a reflectance greater than 0.5, preferably greater than 0.6 or 0.7, most preferably greater than 0.8 or 0.85, optimally greater than 0.9 or 0.95.

Preferably, though not necessarily, the reflection surface 4 is curved in one or preferably two directions so as to optimise focusing between the fibre core and the light element. A parabolic or an elliptical reflector are two preferred embodiments. According to particularly preferred embodiments, the actual shape of the reflecting surface is optimized so that optimum focusing into the optical fibre core or onto a photodetector or the light collecting surface is achieved. To this end, the surface 4 is shaped and positioned such that preferably more than 30% of the light withdrawn from the fibre core is reflected, more preferably more than 40%, 50% or 60%, most preferably more than 70% or 80%. For light injection, the surface 14 is shaped and positioned such that as much light as possible emitted by the light source is injected into the fibre core as a guided mode, e.g. preferably more than 0.05%, more preferably more than 0.1%, 0.5% or 1%, most preferably more than 10%, 30% or 40%. Differences in phase-space area between the end surface of the light emitting source and the core of the fibre necessarily result in lower light injection efficiencies than are possible with a similar geometry for withdrawing light.

The invention produces several new and unexpected advantages. First by disposing the light element 68 and its end surface 13 completely out of the plane 24 of the bend, the bend profile of the optical fibre portion can be optimized as desired to achieve optimum optical detection or injection efficiency without being unduly further modified due to a physical size of the light element or its end surface.

In the absence of this feature of the invention the difference between the physical size of the light element and the optical fibre (including its bent profile) requires that the end surface of the light element be disposed an undesirably large distance away from the beginning of the fibre bend which tends to decrease coupling efficiency. In addition, to allow the fibre to clear a lowermost edge of the end surface the fibre bend portion must necessarily extend a distance so as to include an arc of fibre, which is particularly disadvantageous since very little of the light escaping the fibre within that arc will be collected by the end surface. Also, if the light element were disposed so that its end surface were in the plane of the bend, the substrate housing the light element would need to be unduly thick in that region which contains the groove for defining the bend profile for the fibre. This would complicate manufacture of the substrate as molding tolerances become difficult to control.

In the invention, however, the reflection surface 4 can be disposed as close as desired to the bent optical fibre portion 2 and can be made as large and shaped as desired so as to deflect as much light as is required escaping from the fibre or the light source to achieve highest coupling efficiency. As mentioned, for light withdrawal, since the end surface of the light collecting element is out of the plane 24 of the bend, preferably the bent portion 22 of the optical fibre is disposed entirely upstream of the reflection surface 4, and for light injection, is disposed entirely downstream of the reflection surface 14 to achieve highest efficiencies.

Figure 2 illustrates another preferred embodiment of the invention. In this embodiment, the light 3 withdrawn from the optical fibre 1 at the bent portion 2 is confined within a waveguide 30 which forms part of the substrate 16 and forms the bend profile 22 for the bent optical fibre portion 2, with the reflection surface 4 being disposed at an end of the waveguide 30.

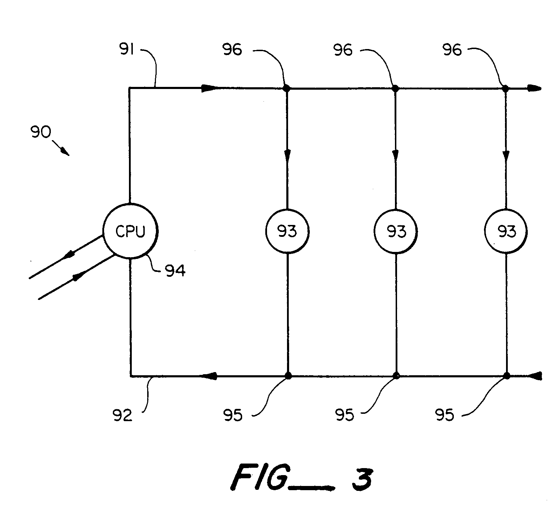

Figure 3 illustrates one practical embodiment for using taps having reflecting surfaces as described, Figure 3 illustrating an optical fibre network 90 having first and second bus fibres 91, 92 interconnecting a plurality of terminals 93 in a bus architecture. The optical fibre 91 constitutes a read optical fibre, which the optical fibre 92 constituting a write optical fibre, the network being controlled by a CPU or central processing unit 94. According to the invention, the light is withdrawn from the read optical fibre 91 in a serial manner using a plurality of read taps 96 disposed in series constructed according to any combination of the embodiments described above, with the terminals 93 writing onto the write bus 92 via a plurality of taps 95 disposed in series and constructed according to any combination of the taps described above. Preferably signals going to any one or more of the terminals 93 are multiplexed in time rather than controlled by a token passing algorithm. According to a particularly preferred embodiment, any one or more of the terminals 93 is connected to one or more telephones, personal computers, mainframe computers, or similar data assembling and generating equipment.

The invention is useful for tapping both single mode and multimode fibre, including both step index and graded index, and is usable with both glass-on-glass and plastic clad silica fibre. According to a preferred embodiment, the invention includes the use of glass-on-glass fibre including a polymeric coating (e.g. buffer), the coating preferably having an index of refraction higher than the cladding, examples being an acrylate or silicone buffer, and/or any thin additional layers (e.g. jackets) surrounding the buffer. Typical preferred glass-on-glass fibres include single mode fibres having a core diameter of about 10 µm, and a cladding diameter of about 125 µm, and a buffer diameter in a range between about 250-500 µm, with multimode glass-on-glass fibre including a core/cladding diameter of roughly 50/125 µms, 100/140 µms, and 85/125 µm, for example. Preferred fibres include those having cylindrical cores, cylindrical claddings and cylindrical coatings (e.g. buffers and/or jackets) and preferably at least the buffer being maintained intact so as not to detrimentally degrade the strength of the fibre by exposing a glass surface thereof to moisture.

## Claims

1. A tap for extracting light from an intermediate portion (2) of an optical fibre (1) core by passing the light through a side of the optical fibre, comprising:
a light receiving element (68) having a receiving end surface (13);
an optical coupler (14, 30) consisting of a transparent member provided with a concave outer surface portion (22) for receiving the intermediate portion of the optical fibre bent thereagainst and disposed in a plane (24), so as to extract light at said optical fibre bent portion;
means (20) for maintaining the intermediate portion of the optical fibre bent in said plane (24) against said concave outer portion of said transparent member; and
a light reflector (4) formed on another outer surface portion of said transparent member, said reflector being disposed in the path of the extracted light downstream of the bend and extending traversely to the plane in which the optical fibre bent portion is intended to be maintained so as to deflect the extracted light toward the light receiving element end surface,
characterized in that the receiving end surface (13) of the light receiving element (68) is disposed completely outside said plane (24) in which the optical fibre bent portion is intended to be maintained, and in that the transparent member constituting the optical coupler (14, 30) has an elongate and curved shape, said elongate and curved transparent member being provided in its concave side surface (22) with a groove (17) for receiving said optical fibre bent portion, and said light reflector (4) being formed on another outer surface portion of said curved elongate member which is inclined in such a manner with respect to the optical fibre bent portion maintaining plane (24) as to deflect said extracted light toward said receiving end surface of said light receiving element which is completely outside said optical fibre bent portion maintaining plane.

2. A tap for injecting light into an intermediate portion (2) of an optical fibre (1) core by passing the light through a side of the optical fibre, comprising:
a light source having an end surface;
an optical coupler consisting of a transparent member provided with a concave outer surface portion (22) for receiving the intermediate portion of the optical fibre bent thereagainst and disposed in a plane (24), so as to allow light from the source to enter the core at said optical fibre bent portion;
means (20) for maintaining the intermediate portion of the optical fibre bent in said plane (24) against said concave outer portion of said transparent member; and
a light reflector (4) formed on another outer surface portion of said transparent member, said reflector being disposed in the path of the light from the source and upstream of the bend and extending traversely to the plane in which the optical fibre bent portion is intended to be maintained so as to deflect the light from the source towards the optical fibre bent portion,
characterised in that the end surface (13) of the light source (68) is disposed completely outside said plane (24) in which the optical fibre bent portion is intended to be maintained, and in that the transparent member constituting the optical coupler (14, 30) has an elongate and curved shape, said elongate and curved transparent member being provided in its concave side surface (22) with a groove (17) for receiving said optical fibre bent portion, and said light reflector (4) being formed on another outer surface portion of said curved elongate member which is inclined in such a manner with respect to the optical fibre bent portion maintaining plane (24) as to deflect said light from the light source towards the optical fiber bent portion.

3. A tap according to claim 1 or claim 2, characterized in that the light reflector (4) has a reflecting surface thereon with a reflectance greater than 0.50 and extending in a position so as to reflect at least 20% of the withdrawn or injected light.

4. A tap according to any of claims 1-3, characterized in that the means (20) for maintaining is releasable so that the optical fibre (1) can be completely removed therefrom when so released.

5. A tap according to claim 1, characterized in that the light reflector (4) is non-planar and curved in at least one dimension so as to focus the withdrawn light onto the end surface (13) of the light receiving element (68).

6. A tap according to any one of claims 1-5, characterized in that the light reflector (4) has a reflecting surface thereon with a reflectance greater than 0.95.

7. A tap according to any one of claims 1-6, for extracting light from or injecting light into an optical fibre comprising a core, a cladding, and a polymeric coating, such that the withdrawn or injected light (3) passes though the coating, the bent optical fibre intermediate portion (2) being disposed in a substantially flat plane (24), characterized in that the optical coupler (16) contracts the bent optical fibre portion.

8. A tap according to any one of claims 1-7, for extracting light from or injecting light into an optical fibre comprising a core and cladding characterized in that the bent optical fibre portion (2) defines a macrobend having a bend amplitude greater than twice a diameter of the cladding.

9. A tap according to any one of claims 1-8, for extracting light from or injecting light into an optical fibre comprising a core and a cladding characterized in that the bent optical fibre portion (2) defines a series of microbends having bend amplitudes less than twice a diameter of the cladding.

10. A tap according to any one of claims 1-9, characterized in that the light reflector (4) is a deflection surface located a distance less than 4mm from a furthermost upstream, as viewed for extracted light, section of the bent optical fibre portion (2).

11. A tap according to any one of claims 1-10, characterized in that the light reflector (4) has a reflective coating disposed thereon.

12. A tap according to any one of claims 1-11, characterized in that the transparent member includes a light waveguide (30) extending from the bent optical fibre portion (2) to the light reflector (4).

13. A tap according to any one of claims 1-12, characterized in that the means (20) for maintaining comprises a resilient force means for urging the optical fibre portion within the groove (17).

14. A tap according to any one of claims 1-12, characterized in that the light receiving element (68) includes a pigtail waveguide having an end which forms the light element end surface.

15. A tap according to any one of claims 1-14, characterized in that the light receiving element or light source end surface (13) is located beneath said plane (24) and under a deflection surface constituted by the light reflector (4) and within 4mm of a furthermost section of the bent optical fibre portion (2).

16. A method of making a tap for coupling light between a light element and an intermediate portion (2) of an optical fibre (1) core by passing the light through a side of the optical fibre, which method comprises:
providing a light element (68) having an end surface (13);
providing an optical coupler (14, 30) consisting of a molded transparent member, provided with a concave outer surface portion (22) for receiving the intermediate portion of the optical fibre bent thereagainst and disposed in a plane (24), so as to couple light at said optical fibre bent portion;
providing means (20) for maintaining the intermediate portion of the optical fibre bent in said plane (24) against said concave outer portion of said transparent member; and
forming a light reflector (4) on another outer surface portion of said transparent member, said reflector being disposed in the plath of the coupled light between the bend and the light element end surface and extending traversely to the plane in which the optical fibre bent portion is intended to be maintained so as to form a continuous light path between the bent optical fibre portion (2) and the light element end surface,
characterised in that the end surface (13) of the light element (68) is disposed completely outside said plane (24) in which the optical fibre bent portion is intended to be maintained, and in that the transparent member constituting the optical coupler (14, 30) has an elongate and curved shape, said elongate and curved transparent member being provided in its concave side surface (22) with a groove (17) for receiving said optical fibre bent portion, and said light reflector (4) being formed on another outer surface portion of said curved elongate member which is inclined in such a manner with respect to the optical fibre bent portion maintaining plane (24) as to deflect the light between said end surface and the bent optical fibre portion.

## Patentansprüche

1. Abzweig zum Auskoppeln von Licht aus einem Zwischenbereich (2) eines Kerns einer Lichtleitfaser (1) durch Hindurchleiten des Lichts durch eine Seite der Lichtleitfaser, wobei der Abzweig aufweist:
ein Lichtaufnahmeelement (68), das eine Aufnahmeendfläche (13) hat;
einen Optokoppler (14, 30), der aus einem lichtdurchlässigen Element besteht, das mit einem konkaven Außenflächenbereich (22) zur Aufnahme des Zwischenbereichs der dagegen gebogenen Lichtleitfaser versehen und in einer Ebene (24) angeordnet ist, um Licht an dem gebogenen Bereich der Lichtleitfaser auszukoppeln;
eine Einrichtung (20), um den Zwischenbereich der Lichtleitfaser in der Ebene (24) gegen den konkaven Außenbereich des lichtdurchlässigen Elements gebogen zu halten; und
einen Lichtreflektor (4), der an einem anderen Außenflächenbereich des lichtdurchlässigen Elements gebildet ist, wobei der Reflektor in der Bahn des ausgekoppelten Lichts an der Abstromseite der Biegung angeordnet ist und sich quer zu der Ebene erstreckt, in der der gebogene Bereich der Lichtleitfaser gehalten werden soll, um das ausgekoppelte Licht in Richtung zu der Endfläche des Lichtaufnahmeelements abzulenken;
dadurch gekennzeichnet, daß die Aufnahmeendfläche (13) des Lichtaufnahmeelements (68) vollständig außerhalb der Ebene (24) angeordnet ist, in der der gebogene Bereich der Lichtleitfaser gehalten werden soll, und daß das lichtdurchlässige Element, das den Optokoppler (14, 30) bildet, eine langgestreckte und gekrümmte Gestalt hat, wobei das langgestreckte und gekrümmte lichtdurchlässige Element in seiner konkaven Seitenfläche (22) mit einer Nut (17) zur Aufnahme des gebogenen Bereichs der Lichtleitfaser versehen ist und der Lichtreflektor (4) an einem anderen Außenflächenbereich des gekrümmten langgestreckten Elements gebildet ist, der auf solche Weise in bezug auf die den gebogenen Bereich der Lichtleitfaser haltende Ebene (24) geneigt ist, daß er das ausgekoppelte Licht in Richtung zu der Aufnahmeendfläche des Lichtaufnahmeelements ablenkt, die vollständig außerhalb der den gebogenen Bereich der Lichtleitfaser haltenden Ebene liegt.

2. Abzweig zum Einkoppeln von Licht in einen Zwischenbereich (2) eines Kerns einer Lichtleitfaser (1) durch Hindurchleiten des Lichts durch eine Seite der Lichtleitfaser, wobei der Abzweig aufweist:
eine Lichtquelle, die eine Endfläche hat;
einen Optokoppler, der aus einem lichtdurchlässigen Element besteht, das mit einem konkaven Außenflächenbereich (22) zur Aufnahme des Zwischenbereichs der dagegen gebogenen Lichtleitfaser versehen und in einer Ebene (24) angeordnet ist, um zuzulassen, daß Licht von der Quelle in den Kern an dem gebogenen Bereich der Lichtleitfaser eintritt;
eine Einrichtung (20), um den Zwischenbereich der Lichtleitfaser in der Ebene (24) gegen den konkaven Außenbereich des lichtdurchlässigen Elements gebogen zu halten; und
einen Lichtreflektor (4), der an einem anderen Außenflächenbereich des lichtdurchlässigen Elements gebildet ist, wobei der Reflektor in der Bahn des Lichts von der Quelle und an der Aufstromseite der Biegung angeordnet ist und sich quer zu der Ebene erstreckt, in der der gebogene Bereich der Lichtleitfaser gehalten werden soll, um das Licht von der Quelle in Richtung zu dem gebogenen Bereich der Lichtleitfaser abzulenken,
dadurch gekennzeichnet, daß die Endfläche (13) der Lichtquelle (68) vollständig außerhalb der Ebene (24) angeordnet ist, in der der gebogene Bereich der Lichtleitfaser gehalten werden soll, und daß das lichtdurchlässige Element, das den Optokoppler (14, 30) bildet, eine langgestreckte und gekrümmte Gestalt hat, wobei das langgestreckte und gekrümmte lichtdurchlässige Element in seiner konkaven Seitenfläche (22) mit einer Nut (17) zur Aufnahme des gebogenen Bereichs der Lichtleitfaser versehen ist und der Lichtreflektor (4) an einem anderen Außenflächenbereich des gekrümmten langgestreckten Elements gebildet ist, der auf solche Weise in bezug auf die den gebogenen Bereich der Lichtleitfaser haltende Ebene (24) geneigt ist, daß er das Licht von der Lichtquelle in Richtung zu dem gebogenen Bereich der Lichtleitfaser ablenkt.

3. Abzweig nach Anspruch 1 oder 2, dadurch gekennzeichnet, daß der Lichtreflektor (4) eine Reflexionsfläche mit einem Reflexionsvermögen von mehr als 0,50 daran hat, die sich in eine Position erstreckt, um wenigstens 20 % des ausgekoppelten oder eingekoppelten Lichts zu reflektieren.

4. Abzweig nach einem der Ansprüche 1-3, dadurch gekennzeichnet, daß die Halteeinrichtung (20) lösbar ist, so daß, wenn sie gelöst ist, die Lichtleitfaser (1) vollständig davon entfernt werden kann.

5. Abzweig nach Anspruch 1, dadurch gekennzeichnet, daß der Lichtreflektor (4) in wenigstens einer Dimension nichtplanar und gekrümmt ist, um das ausgekoppelte Licht auf die Endfläche (13) des Lichtaufnahmeelements (68) zu fokussieren.

6. Abzweig nach einem der Ansprüche 1-5, dadurch gekennzeichnet, daß der Lichtreflektor (4) eine Reflexionsfläche mit einem Reflexionsvermögen von mehr als 0,95 daran hat.

7. Abzweig nach einem der Ansprüche 1-6 zum Auskoppeln von Licht aus oder Einkoppeln von Licht in eine Lichtleitfaser, die einen Kern, einen Mantel und einen polymeren Überzug aufweist, so daß das ausgekoppelte oder eingekoppelte Licht (3) durch den Überzug hindurchtritt, wobei der gebogene Zwischenbereich (2) der Lichtleitfaser in einer im wesentlichen flachen Ebene (24) angeordnet ist, dadurch gekennzeichnet, daß der Optokoppler (16) den gebogenen Bereich der Lichtleitfaser kontrahiert.

8. Abzweig nach einem der Ansprüche 1-7 zum Auskoppeln von Licht aus oder zum Einkoppeln von Licht in eine Lichtleitfaser, die einen Kern und einen Mantel aufweist, dadurch gekennzeichnet, daß der gebogene Bereich (2) der Lichtleitfaser eine Makrobiegung definiert, die eine Biegungsamplitude hat, die größer als das Doppelte eines Durchmessers des Mantels ist.

9. Abzweig nach einem der Ansprüche 1-8 zum Auskoppeln von Licht aus oder Einkoppeln von Licht in eine Lichtleitfaser, die einen Kern und einen Mantel aufweist, dadurch gekennzeichnet, daß der gebogene Bereich (2) der Lichtleitfaser eine Reihe von Mikrobiegungen definiert, die Biegungsamplituden haben, die kleiner als das Doppelte eines Durchmessers des Mantels sind.

10. Abzweig nach einem der Ansprüche 1-9, dadurch gekennzeichnet, daß der Lichtreflektor (4) eine Ablenkfläche ist, die um einen Abstand von weniger als 4 mm von einem entferntesten, in bezug auf das ausgekoppelte Licht gesehen, aufstromseitigen Abschnitt des gebogenen Bereichs (2) der Lichtleitfaser entfernt positioniert ist.

11. Abzweig nach einem der Ansprüche 1-10, dadurch gekennzeichnet, daß auf dem Lichtreflektor (4) ein reflektierender Überzug angeordnet ist.

12. Abzweig nach einem der Ansprüche 1-11, dadurch gekennzeichnet, daß das lichtdurchlässige Element einen Lichtwellenleiter (30) aufweist, der sich von dem gebogenen Bereich (2) der Lichtleitfaser zu dem Lichtreflektor (4) erstreckt.

13. Abzweig nach einem der Ansprüche 1-12, dadurch gekennzeichnet, daß die Halteeinrichtung (20) eine Federkrafteinrichtung aufweist, um den Lichtleitfaserbereich in die Nut (17) zu drängen.

14. Abzweig nach einem der Ansprüche 1-12, dadurch gekennzeichnet, daß das Lichtaufnahmeelement (68) einen Anschlußfaserwellenleiter mit einem Ende aufweist, das die Endfläche des Lichtelements bildet.

15. Abzweig nach einem der Ansprüche 1-14, dadurch gekennzeichnet, daß das Lichtaufnahmeelement oder die Endfläche (13) der Lichtquelle unter der Ebene (24) und unter einer Ablenkfläche, die von dem Lichtreflektor (4) gebildet ist, und innerhalb von 4 mm eines entferntesten Abschnitts des gebogenen Bereichs (2) der Lichtleitfaser positioniert ist.

16. Verfahren zum Herstellen eines Abzweigs zum Koppeln von Licht zwischen einem Lichtelement und einem Zwischenbereich (2) eines Kerns einer Lichtleitfaser (1) durch Hindurchleiten des Lichts durch eine Seite der Lichtleitfaser, wobei das Verfahren die folgenden Schritte aufweist:
Bereitstellen eines Lichtelements (68), das eine Endfläche (13) hat;
Bereitstellen eines Optokopplers (14, 30), der aus einem lichtdurchlässigen Formelement besteht, das mit einem konkaven Außenflächenbereich (22) zur Aufnahme des Zwischenbereichs der dagegen gebogenen Lichtleitfaser versehen und in einer Ebene (24) angeordnet ist, um Licht an dem gebogenen Bereich der Lichtleitfaser zu koppeln;
Bereitstellen einer Einrichtung (20), um den Zwischenbereich der Lichtleitfaser in der Ebene (24) gegen den konkaven Außenbereich des lichtdurchlässigen Elements gebogen zu halten; und
Bilden eines Lichtreflektors (4) an einem anderen Außenflächenbereich des lichtdurchlässigen Elements, wobei der Reflektor in der Bahn des gekoppelten Lichts zwischen der Biegung und der Endfläche des Lichtelements angeordnet ist und sich quer zu der Ebene erstreckt, in der der gebogene Bereich der Lichtleitfaser gehalten werden soll, um eine kontinuierliche Lichtbahn zwischen dem gebogenen Bereich (2) der Lichtleitfaser und der Endfläche des Lichtelements zu bilden,
dadurch gekennzeichnet, daß die Endfläche (13) des Lichtelements (68) vollständig außerhalb der Ebene (24) angeordnet ist, in der der gebogene Bereich der Lichtleitfaser gehalten werden soll, und daß das lichtdurchlässige Element, das den Optokoppler (14, 30) bildet, eine langgestreckte und gekrümmte Gestalt hat, wobei das langgestreckte und gekrümmte lichtdurchlässige Element in seiner konkaven Seitenfläche (22) mit einer Nut (17) zur Aufnahme des gebogenen Bereichs der Lichtleitfaser versehen ist und der Lichtreflektor (4) an einem anderen Außenflächenbereich des gekrümmten langgestreckten Elements gebildet ist, der auf solche Weise in bezug auf die den gebogenen Bereich der Lichtleitfaser haltende Ebene (24) geneigt ist, daß er das Licht zwischen der Endfläche und dem gebogenen Bereich der Lichtleitfaser ablenkt.

## Revendications

1. Dérivation pour extraire de la lumière d'un tronçon intermédiaire (2) d'un coeur de fibre optique (1) en faisant passer la lumière à travers un côté de la fibre optique, comportant :
un élément (68) de réception de lumière ayant une surface extrême (13) de réception ;
un coupleur optique (14, 30) constitué d'un élément transparent pourvu d'une partie de surface extérieure concave (22) destinée à recevoir le tronçon intermédiaire de la fibre optique coudé contre elle et disposé dans un plan (24) afin d'extraire de la lumière audit tronçon coudé de la fibre optique ;
des moyens (20) destinés à maintenir le tronçon intermédiaire de la fibre optique coudé dans ledit plan (24) contre ladite partie extérieure concave dudit élément transparent ; et
un réflecteur (4) de lumière formé sur une autre partie de surface extérieure dudit élément transparent, ledit réflecteur étant disposé dans le trajet de la lumière extraite en aval du coude et s'étendant à travers le plan dans lequel le tronçon coudé de la fibre optique est destiné à être maintenu afin de dévier la lumière extraite vers la surface extrême de l'élément de réception de lumière,
caractérisée en ce que la surface extrême (13) de réception de l'élément (68) de réception de lumière est disposée complètement en dehors dudit plan (24) dans lequel le tronçon coudé de la fibre optique est destiné à être maintenu, et en ce que l'élément transparent constituant le coupleur optique (14, 30) présente une forme allongée et courbée, la surface latérale concave (22) dudit élément transparent allongé et courbé étant pourvue d'une gorge (17) destinée à recevoir ledit tronçon coudé de la fibre optique, et ledit réflecteur (4) de lumière étant formé sur une autre partie de surface extérieure dudit élément allongé et courbé, qui est inclinée d'une manière telle, par rapport au plan (24) de maintien du tronçon coudé de la fibre optique, que ladite lumière extraite est déviée vers ladite surface extrême de réception dudit élément de réception de lumière qui est totalement en dehors dudit plan de maintien du tronçon coudé de la fibre optique.

2. Dérivation pour injecter de la lumière dans un tronçon intermédiaire (2) d'un coeur de fibre optique (1) en faisant passer la lumière à travers un côté de la fibre optique, comportant :
une source de lumière ayant une surface extrême ;
un coupleur optique constitué d'un élément transparent pourvu d'une partie de surface extérieure concave (22) destinée à recevoir le tronçon intermédiaire de la fibre optique coudé contre elle et disposé dans un plan (24), afin de premettre à de la lumière provenant de la source d'entrer dans le coeur audit tronçon coudé de la fibre optique ;
des moyens (20) destinés à maintenir le tronçon intermédiaire de la fibre optique coudé dans ledit plan (24) contre ladite partie extérieure concave dudit élément transparent ; et
un réflecteur (4) de lumière formé sur une autre partie de surface extérieure dudit élément transparent, ledit réflecteur étant disposé dans le trajet de la lumière partant de la source et en amont du coude et s'étendant à travers le plan dans lequel le tronçon coudé de la fibre optique est destiné à être maintenu afin de dévier la lumière depuis la source vers le tronçon coudé de la fibre optique,
caractérisée en ce que la surface extrême (13) de la source de lumière (68) est disposée complètement en dehors dudit plan (24) dans lequel le tronçon coudé de la fibre optique est destiné à être maintenu, et en ce que l'élément transparent constituant le coupleur optique (14, 30) présente une forme allongée et courbée, la surface latérale concave (22) dudit élément transparent allongé et courbé étant pourvue d'une gorge (17) destinée à recevoir ledit tronçon coudé de la fibre optique, et ledit réflecteur (4) de lumière étant formé sur une autre partie de surface extérieure dudit élément allongé et courbé qui est inclinée d'une manière telle, par rapport au plan (24) de maintien du tronçon coudé de la fibre optique, que ladite lumière est déviée de la source de lumière vers le tronçon coudé de la fibre optique.

3. Dérivation selon la revendication 1 ou la revendication 2, caractérisée en ce que le réflecteur (4) de lumière porte une surface réfléchissante ayant une réflectance supérieure à 0,50 et s'étendant dans une position telle qu'elle réfléchit au moins 20 % de la lumière prélevée ou injectée.

4. Dérivation selon l'une quelconque des revendications 1-3, caractérisée en ce que les moyens (20) de maintien sont libérables afin que la fibre optique (1) puisse en être complètement enlevée lorsqu'elle est ainsi libérée.

5. Dérivation selon la revendication 1, caractérisée en ce que le réflecteur (4) de lumière est non plan et est courbé dans au moins une dimension afin de focaliser la lumière prélevée sur la surface extrême (13) de l'élément (68) de réception de lumière.

6. Dérivation selon l'une quelconque des revendications 1-5, caractérisée en ce que le réflecteur (4) de lumière porte une surface réfléchissante ayant une réflectance supérieure à 0,95.

7. Dérivation selon l'une quelconque des revendications 1-6, pour extraire de la lumière de, ou injecter de la lumière dans, une fibre optique comportant un coeur, une gaine et un revêtement polymérique, afin que la lumière prélevée ou injectée (3) passe à travers le revêtement, le tronçon intermédiaire coudé (2) de la fibre optique étant disposé dans un plan sensiblement plat (24), caractérisée en ce que le coupleur optique (16) contracte le tronçon coudé de la fibre optique.

8. Dérivation selon l'une quelconque des revendications 1-7, pour extraire de la lumière de, ou injecter de la lumière dans, une fibre optique comportant un coeur et une gaine, caractérisée en ce que le tronçon coudé (2) de la fibre optique définit une macrocourbure ayant une amplitude de courbure supérieure au double du diamètre de la gaine.

9. Dérivation selon l'une quelconque des revendications 1-8, pour extraire de la lumière de, ou injecter de la lumière dans, une fibre optique comportant un coeur et une gaine, caractérisée en ce que le tronçon coudé (2) de la fibre optique définit une série de microcourbures ayant des amplitudes de courbure inférieures au double du diamètre de la gaine.

10. Dérivation selon l'une quelconque des revendications 1-9, caractérisée en ce que le réflecteur (4) de lumière présente une surface de déviation placée à une distance inférieure à 4 mm d'une section, située davantage en amont, par rapport à la lumière extraite, du tronçon coudé (2) de la fibre optique.

11. Dérivation selon l'une quelconque des revendications 1-10, caractérisée en ce qu'un revêtement réfléchissant est disposé sur le réflecteur (4) de lumière.

12. Dérivation selon l'une quelconque des revendications 1-11, caractérisée en ce que l'élément transparent comprend un guide d'ondes lumineuses (30) s'étendant du tronçon coudé (2) de la fibre optique jusqu'au réflecteur (4) de lumière.

13. Dérivation selon l'une quelconque des revendications 1-12, caractérisée en ce que les moyens (20) de maintien comprennent des moyens à force élastique destinés à pousser le tronçon de la fibre optique à l'intérieur de la gorge (17).

14. Dérivation selon l'une quelconque des revendications 1-12, caractérisée en ce que l'élément (68) de réception de lumière comprend un guide d'ondes en queue de cochon ayant une extrémité qui forme la surface extrême de l'élément lumineux.

15. Dérivation selon l'une quelconque des revendications 1-14, caractérisée en ce que la surface extrême 5 (13) de l'élément de réception de lumière ou de la source de lumière est placée au-dessous dudit plan (24) et au-dessous d'une surface de déviation constituée par le réflecteur (4) de lumière et en deçà de 4 mm d'une section plus éloignée du tronçon coudé (2) de la fibre optique.

16. Procédé de réalisation d'une dérivation pour coupler de la lumière entre un élément lumineux et un tronçon intermédiaire (2) d'un coeur de fibre optique (1) en faisant passer la lumière à travers un côté de la fibre optique, lequel procédé comprend :
l'utilisation d'un élément lumineux (68) ayant une surface extrême (13) ;
l'utilisation d'un coupleur optique (14, 30) constitué d'un élément transparent moulé, pourvu d'une partie de surface extérieure concave (22) destinée à recevoir le tronçon intermédiaire de la fibre optique coudé contre elle et disposé dans un plan (24), afin de coupler de la lumière audit tronçon coudé de la fibre optique ;
l'utilisation de moyens (20) destinés à maintenir le tronçon intermédiaire de la fibre optique coudé dans ledit plan (24) contre ladite partie extérieure concave dudit élément transparent ; et
la formation d'un réflecteur (4) de lumière sur une autre partie de surface extérieure dudit élément transparent, ledit réflecteur étant disposé dans le trajet de la lumière couplée entre le coude et la surface extrême de l'élément lumineux et s'étendant à travers le plan dans lequel le tronçon coudé de la fibre optique est destiné à être maintenu de façon à former un trajet lumineux continu entre le tronçon coudé (2) de la fibre optique et la surface extrême de l'élément lumineux,
caractérisé en ce que la surface extrême (13) de l'élément lumineux (68) est disposée complètement en dehors dudit plan (24) dans lequel le tronçon coudé de la fibre optique est destiné à être maintenu, et en ce que l'élément transparent constituant le coupleur optique (14, 30) présente une forme allongée et courbée, la surface latérale concave (22) dudit élément transparent allongé et courbé étant pourvue d'une gorge (17) destinée à recevoir ledit tronçon coudé de la fibre optique, et ledit réflecteur (4) de lumière étant formé sur une autre partie de surface extérieure dudit élément allongé et courbé qui est inclinée d'une manière telle, par rapport au plan (24) de maintien du tronçon coudé de la fibre optique, que la lumière est déviée entre ladite surface extrême et le tronçon coudé de la fibre optique.
